Europäisches Patentamt

European Patent Office

Office européen des brevets

(11) Publication number: **0 407 930 A1**

# EUROPEAN PATENT APPLICATION

(21) Application number: 90113055.9

(51) Int. Cl.⁵: **G01N 29/00**

(22) Date of filing: 09.07.90

(30) Priority: 10.07.89 JP 177830/89

(43) Date of publication of application:
16.01.91 Bulletin 91/03

(84) Designated Contracting States:
**DE FR GB IT**

(71) Applicant: **HITACHI CONSTRUCTION
MACHINERY CO., LTD.**
**6-2, Ohtemachi 2-chome
Chiyoda-ku Tokyo 100(JP)**

(72) Inventor: **Arima, Yukio**
**4-24 Inarimae
Tsukuba-shi(JP)**
Inventor: **Yanagimoto, Hiroaki**
**1828-3-405 Niihari, Chiyodamura**

Niihari-gun, Ibaraki-ken(JP)
Inventor: **Horino, Masaya**
**Tsukuba, Hausu 9-301, 2625-3 Shimoinayoshi
Chiyodamura, Niihari-gun, Ibaraki-ken(JP)**
Inventor: **Kohno, Akiomi**
**6526-242 Koibuchi, Tomobemachi
Nishiibaraki-gun, Ibaraki-ken(JP)**
Inventor: **Ibaraki, Yoshiro**
**679-13 Matsuzakae
Tsukuba-shi(JP)**

(74) Representative: **Patentanwälte Beetz sen. -
Beetz jun. Timpe - Siegfried -
Schmitt-Fumian
Steinsdorfstrasse 10
D-8000 München 22(DE)**

(54) **Nondestructive inspection method and apparatus.**

(57) Method and apparatus for nondestructively and quantitatively detecting a characteristic value (e.g. joining strength) of a joined portion under test from the signal strength and its frequency of occurrence obtained from the actual joined portion under test by using an estimated joining strength H obtained according to a data frequency distribution showing the relation between "n" levels of signal strength found by irradiating the ultrasonic waves or radiant rays to a joined portion having a certain characteristic value, and the frequency of occurrence of the signal strength data, and also from an analytical curve showing the relation between said characteristic value and the estimated joining strength.

F I G. 10

## NONDESTRUCTIVE INSPECTION METHOD AND APPARATUS

### BACKGROUND OF THE INVENTION

This invention relates to a nondestructive inspection method for structures, and particularly to a nondestructive inspection method suitable for qualitative evaluation of the strength of joined portions and a nondestructive inspection apparatus for automatic calculation of the strength of joined portions according to said nondestructive inspection method.

Conventional nondestructive inspection techniques for joined portions are discussed in "Yosetsu Gijutsu (Welding Technology), May issue of 1987, pp. 64-70.

In those conventional techniques, the collection of data is discussed, but the method of using data is not disclosed in detail. Therefore, by those technique, it is possible to evaluate the shape and size of defects in the joined portions, but it is not possible to quantitatively evaluate the characteristics, such as the strength, heat conductivity and electric conductivity, of the joined portions.

The related techniques and apparatuses are disclosed in JP-A-55-139632, JP-A-56-72341, JP-A-56-164953, JP-A-57-8445, JP-A-57-64161, JP-A-7465, JP-A-61-128162, JP-A-184455, and U.S. Pat. No. 4,550,609.

Those conventional techniques only show a method for determining a qualitative tendency of a joined portion in its nondestructive inspection of, and require use of another inspection method for quantitative evaluation of the characteristics, such as strength, which is troublesome. In addition, the conventional techniques could not clarify the relation between the shape and size of defects in the joined portion, and the strength, and so on.

### SUMMARY OF THE INVENTION

An object of this invention is to provide a nondestructive inspection method for nondestructive, quantitative evaluation of the characteristics of the joined portion, such as strength, heat conductivity and electric conductivity.

Another object of this invention is to provide a nondestructive inspection apparatus which nondestructively and automatically estimates the characteristics of the joined portion, such as strength, and displays the result.

In order to achieve the above objects, this invention proposes a nondestructive inspection method comprising the steps of:

obtaining data on signal strength In and the occurrence frequency Fn of the recorded signal strength according to a data frequency distribution showing the relation between "n" levels of the signal strength and the occurrence frequency of the recorded various levels of signal strength of the ultrasonic waves or radiant rays, the data of which are gathered from a joined portion by irradiating the ultrasonic waves or radiant rays to the joined portion having a certain characteristic value V;

obtaining a value H of the sum of all products of "n" levels of signal strength and the occurrence frequency of strength data by using the following equation:

$$H = \sum_{n=0}^{N} In \cdot Fn$$

preparing in advance an analytical curve showing the relation between the characteristic value V and the H of joined portions formed in various joined conditions; and

quantitatively estimating a characteristic value of said joined portion from the value H calculated by the above-mentioned equation according to the recorded signal strength and the frequency of occurrence of signal strength data of the actual joined portion under test, and also from said analytical curve prepared in advance.

In order to achieve the above objects, this invention proposes a nondestructive inspection method comprising the steps of:

obtaining a data frequency distribution showing the relation between the signal strength of the ultrasonic waves or radiant rays and its occurrence frequency, obtained from joined portions by irradiating ultrasonic waves or radiant rays to the joined portions in various joined conditions;

preparing in advance a calibration curve showing the relation between said various levels of joining strength and at least one variable among the maximum frequency of said data frequency distribution, the area of a data frequency distribution diagram normalized in relation to said maximum frequency, the difference between the maximum and minimum values of signal strength that have occurred, the ratio of the maximum value to the minimum value of signal strength that have occurred, and the signal strength at the maximum frequency; and

quantitatively estimating the joining strength of said joined portion from the signal strength obtained from the actual joined portion under test, and from said calibration curve prepared in advance.

In order to achieve the above objects, this invention further proposes a nondestructive inspection method comprising the steps of:

obtaining a function 1 (A) of signal strength A, the value of which function changes linearly and continuously from $\sigma_B$ to 0 in the range of signal strength $A_B$ to $A_D$, according to a data frequency distribution showing the relation between the signal strength of the ultrasonic waves or radiant rays and its occurrence frequency, obtained from joined portions by irradiating ultrasonic waves or radiant rays to the joined portions formed in various joined conditions, where the joining strength $\sigma_B$ is given at the signal strength $A_B$ obtained from a completely joined portion of the object under test and the joining strength 0 is given at the signal strength $A_D$ which is recorded when a complete separation occurs; and

taking as an estimate of joining strength the value H calculated by the following equation in which F(A) is a function which gives a frequency of occurrence at the signal strength A:

$$H = \int_{A_B}^{A_D} I(A) \cdot F(A) dA / \int_{A_B}^{A_D} F(A) dA$$

In order to achieve the above objects, this invention proposes a nondestructive inspection apparatus comprising:

a memory unit for storing a calibration curve showing the relation between said various level of joining strength and at least one variable among the maximum frequency in a data frequency distribution showing the relation between the signal strength of the ultrasonic waves or radiant rays and its frequency of occurrence, obtained from the joined portions by irradiating the ultrasonic waves or radiant rays to the joined portions formed in various joined conditions, the area of the data frequency distribution diagram normalized in relation to said maximum frequency, the difference between the maximum and minimum values of signal strength that have occurred, the ratio between the maximum value and the minimum value of signal strength that have occurred, and the signal strength at the maximum frequency, at least one of the various levels of joining strength of a completely joined body and a physical property value of the material constituting the joined portion;

a source of ultrasonic waves or X-rays;

a scanning device for making said source of ultrasonic waves or X-rays perform scanning;

a sensor for ultrasonic waves or X-rays;

a receiving circuit for accepting output signals from said sensor;

a data processing unit for obtaining the function F(A) to show the occurrence frequency at a signal strength A from output signals from said receiving circuit, and calculating the joining strength of an actual joined portion under test according to the function F(A); and

a display unit for showing the result obtained.

As an alternative scheme for the above-mentioned method, it is possible to prepare in advance a calibration curve showing a function of the area of the data frequency distribution diagram normalized in relation to the maximum frequency and the joined portion strength in the data frequency distribution obtained by detecting defects in the joined portion, and estimate the joining strength from the area of said data frequency distribution diagram obtained as a result of defect detection of the actual object examined and said calibration curve prepared in advance.

It is also possible to obtain the signal strength $A_B$ by complete joining, the signal strength $A_D$ by a complete separation, the signal strength $A\alpha$ which occupies a predetermined rate $\alpha$ relative to the area of said data frequency distribution diagram, and the minimum value $A_{min}$ of the signal strength obtained from the joined portion, perform calculation by the following equation:

$R_\alpha = (A_\alpha - A_{min}) / (A_D - A_B)$,

prepare in advance a calibration curve showing the relation between the $R\alpha$ found by the above calculation and the joining strength, and

estimate the joining strength from the signal strength obtained by defect detection of the actual object under test and also from the calibration curve prepared in advance.

The function of the present invention will next be described.

When a sound joined portion is inspected for defects, the strength of the echo of the ultrasonic waves from the joined portion or the radiation that has traveled through the joined portion has become smaller than that has penetrated through a joined portion containing a defect. In other words, the strength of signals varies with the condition of the joined portion. Therefore, if the whole area of the joined portion inspected is scanned for defects and data on all levels of signal strength obtainable during scanning and the occurrence frequencies of the signals are gathered, it should be possible to clarify the joined condition of the whole area of the joined portion, namely, the characteristics of the joined portion.

To confirm this, various experiments were conducted. As a result, it has become clear that there is correlation between the sum of the products of the signal strength In and the occurrence frequency Fn of the signals, expressed by the following equation

$$H = \sum_{n=0}^{N} In \cdot Fn$$

and the strength, heat conductivity and electric conductivity of the joined portion.

Therefore, if joined portions formed in various joined conditions are inspected nondestructively for defects, various estimates of H are obtained, and an analytical curve is prepared in advance which shows the relation between the characteristic values of the joined portions and the estimates of H, it is possible to estimate the characteristics of a joined portion according to the signal strength and its occurrence frequency given by a piece of work inspected whose characteristic values are unknown and from the analytical curve prepared in advance.

When a good-quality joined portion is inspected for defects, the strength of the echo of the ultrasonic waves from the joined portion or that of the radiant rays that have traveled through the joined portion is substantially uniform. Therefore, the variation in the data frequency distribution is small and the maximum frequency is large. In consequence, the area of the normalized data frequency distribution is small and the difference between the maximum strength and the minimum strength is small.

In contrast, when a joined portion having a defect is inspected for defects, the echo of the ultrasonic waves or the intensity of the radiation differs between the sound section and the defective section of a joined portion. Therefore, the variation in the data frequency distribution is large and the maximum frequency is small, resulting in a large area of the normalized data frequency distribution and a large difference or ratio between the maximum and minimum signal strength.

As described, the variables in the data frequency distribution correspond to the formed condition of the defect in the joined portion. Also, the formed condition of the defect has the corresponding joining strength. Therefore, if a calibration curve is prepared beforehand which shows the relation between the above-mentioned variables and the joining strength, it is possible to estimate the strength of the joined portion in nondestructive manner.

In inspecting a sound joined portion for defects, the echo strength of teh ultrasonic waves or that of the radiant rays (hereafter referred to as the signal strength) transmitted through the joined portion is low, whereas the signal strength from a joined portion containing a defect is higher for increasing number of defects, and the signal strength is highest where there is a complete separation in the joined portion.

So, the per cent by area of the truly joined part in a given joined area is denoted as a joining rate, a joining rate of 1 is assigned to the signal strength obtainable from a sound part of a joined portion, a joining rate of 0 is assigned to the signal strength from a completely separated part of the joined portion, and for the range between these degrees of signal strength a function is set, the value of which varies linearly relative to the signal strength.

Then, by integrating, with respect to all signal strength data from the joined portion, the value of a product of a joining rate obtained by using said function for signal strength data on the joined portion and the frequency of the occurrence of the signal strength, the area of the truly joined part in the whole joined area (hereafter referred to as the joined area rate) can be obtained. Since the joining strength is proportional to the joined area rate, the strength of the joined portion can be estimated nondestructively by multiplying the joining strength of the sound joined portion by a joined area rate obtained from the joined portion examined.

Furthermore, in the data processing unit, a function is set which gives the relation between the signal strength and said joining rate from the signal strength and the occurrence frequency obtained by flaw detection of a joined portion by using a source of ultrasonic waves or X-rays, a scanning device, a sensor, and a receiving circuit, and a product of the joining rate at a given signal strength obtainable by said function and the occurrence frequency of that signal strength is integrated with respect to all data on signal strength to obtain the joined area rate.

The data obtained next is a product of the strength of the sound joined portion stored in the data memory unit and said joined area rate or a data frequency distribution showing the relation between the signal strength and its occurrence frequency. The data processing unit produces as an estimate of joining strength a value estimated from at least one variable out of the maximum frequency of said data frequency distribution, the area of the data frequency distribution diagram normalized in relation to the maximum frequency, the difference between the maximum and minimum values of signal strength that have occurred, the rate of the maximum value to the minimum value of signal strength that have occurred, and the signal strength at the maximum frequency, and also from the calibration curve showing the relation between the variables stored in the data memory unit and the joining strength, and causes the estimate to be shown on the display.

BRIEF DESCRIPTION OF THE DRAWINGS

Fig. 1 is a block diagram of a composition of an embodiment of the nondestructive inspection apparatus according to this invention;

Fig. 2 is a characteristic diagram showing an example of the result of ultrasonic flaw detection of the diffusion bonding interface between zirconia and steel by the pulse reflection method using a focusing probe;

Fig. 3 is a diagram showing the relation between the estimated joining strength obtained by ultrasonic flaw detection and the joining strength obtained by shearing test;

Fig. 4 is a graph showing an example of the result of ultrasonic flaw detection of the diffusion bonding interface between zirconia and an aluminum alloy by the pulse reflection method using a focusing probe;

Fig. 5 is a graph for explaining a method for obtaining a calibration curve showing the relation between the area S and the joining strength;

Fig. 6 is a characteristic curve showing an example of the result of ultrasonic flaw detection of the diffusion bonding interface between ceramics and a metal by the pulse reflection method using a focusing probe;

Fig. 7 is a diagram for explaining a method for obtaining the relation between the echo strength $R_{0.9}$ obtained from joined bodies showing various levels of joining strength and the normalized joining strength $\sigma/\sigma_{max}$;

Fig. 8 is a graph for explaining a method for estimating the joining strength from an echo frequency distribution representing the relation between the echo strength and its frequency of occurrence;

Fig. 9 is a graph showing a degree of agreement between the estimated joining strength H and the actual joining strength; and

Fig. 10 is a block diagram showing a composition of another embodiment of the nondestructive inspection apparatus according to this invention for estimating the joining strength by nondestructive inspection.

DESCRIPTION OF THE PREFERRED EMBODIMENTS

With reference to the accompanying drawings, an embodiment of this invention will be described.

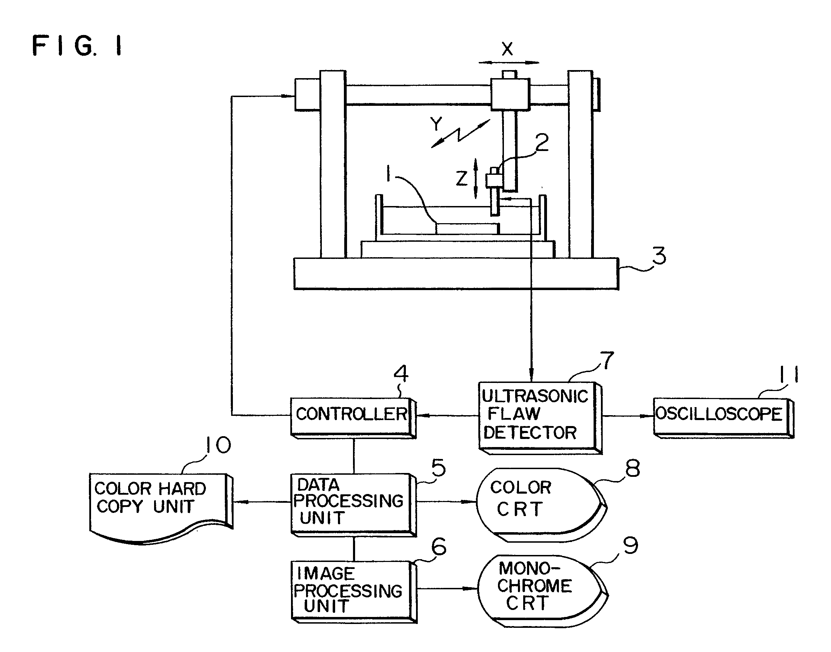

Fig. 1 is a block daigram showing a composition of an embodiment of the nondestructive inspection apparatus according to this invention. As shown in Fig. 1, an object under test 1 is mounted on a scanner 3 and scanned by a probe 2. The probe 2 has ultrasonic signals supplied by an ultrasonic flaw detector 7, and directs the signals to the object under test. The ultrasonic echo signals from the object examined 1 are detected by the probe 2, and input into the ultrasonic flaw detector 7. The ultrasonic flaw detector 7 is connected to an oscilloscope 11 and a controller 4. The output from the controller 4 is supplied to the data processing unit 5 and teh driving mechanism of the scanner 3. The result of processing in the data processing unit 5 can be shown on a color CRT 8 or a color hard copy unit 10, but can be further processed by an image processing unit 6 to be displayed on a monochrome CRT 9.

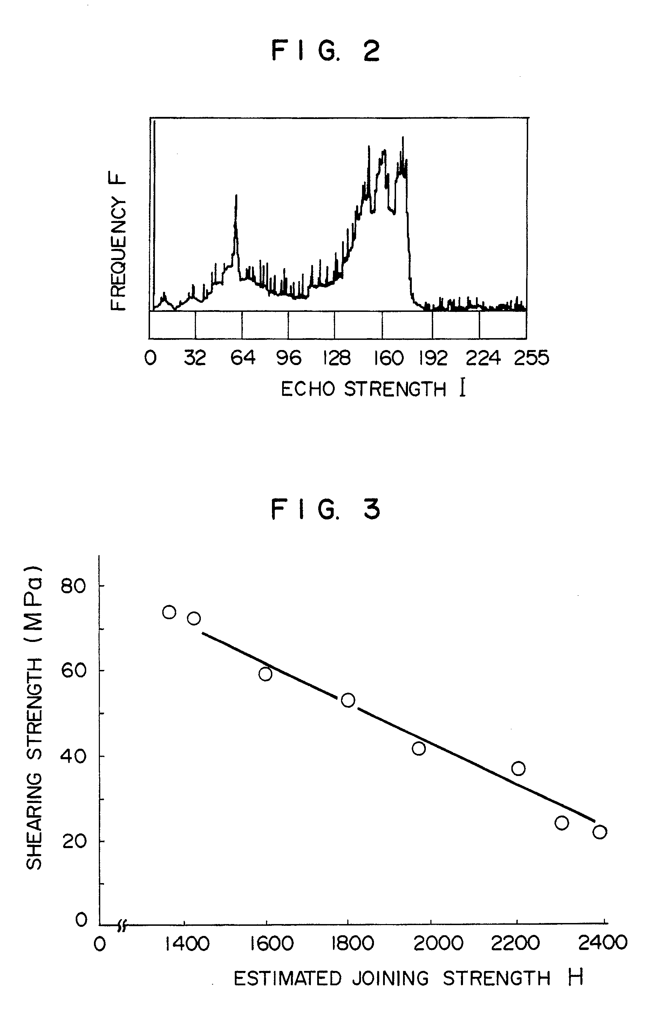

Fig. 2 is a characteristic diagram showing an example of the result of ultrasonic flaw detection of the diffusion bonding interface between zirconia and steel by the pulse reflection method employing a focusing probe. The pulse reflection method uses ultrasonic pulses emitted by the probe to scan the object for flaws. By this method, it is possible to collect a plurality of data, the maximum of which is the total number of ultrasonic pulses emitted from the start to the end of scanning. Fig. 2 is an echo frequency distribution diagram showing the relation between the echo strength I and the frequency F of occurrence of the echo for the whole range of echo strength based on data collected. The axis of abscissa represents the echo strength, while the axis of ordinate represents the frequency of occurrence of the strength of each echo. In this embodiment of the present invention, the whole range of echo strength level is from 0 to 255, and the absolute value of 255 of the maximum level of strength is determined by the maximum output power of the ultrasonic signal amplifier. This maximum level of strength corresponds to the strength of the echo from the interface of the two parts joined together.

Fig. 2 is a displayed example of data on the color CRT 8 or the color hard copy unit 10, after the data obtained by ultrasonic flaw detection were subjected to image information processing by the data processing unit 5 of Fig. 1. The data is processed by a computer system to obtain an estimated joining strength H.

$$H = \sum_{n=0}^{255} In \cdot Fn$$

where
In : strength of each echo
Fn : occurrence frequency of each echo

After the ultrasonic flaw detection, each test piece is subjected to a shearing test to find the joining strength of the test pieces.

Fig. 3 shows an example of the relation between the estimated joining strength H obtained by ultrasonic flaw detection and the joining strength obtained by the shearing test. As is obvious from Fig. 3, there is correlation between the estimated joining strength H and the actual joining strength. If this diagram is used as an analytical curve, the joining strength of the object under test can be estimated from the value H obtained from this object. To this end, it is required that the condition for ultrasonic flaw detection on the product should be the same as the flaw detection condition used in preparing the analytical curve.

The above-mentioned embodiment is concerned with the estimation of joining strength of a joined portion made by diffusion bonding. This invention, however, can be applied to the estimation of other properties of the joined portion. This invention can be applied also to the estimation of the properties of joined portions formed by other bonding methods, such as soldering. The heat conductivity and electric conductivity of the joined portion, above all, can be estimated with very high accuracy. Description has been made of a case where this invention is applied to ultrasonic flaw detection by the pulse reflection method by use of a focusing probe. However, this invention can be applied to all flaw detection methods by which the relation between the strength of data signal and the frequency of its occurrence can be found, such as other types of ultrasonic flaw detection and radiographic methods.

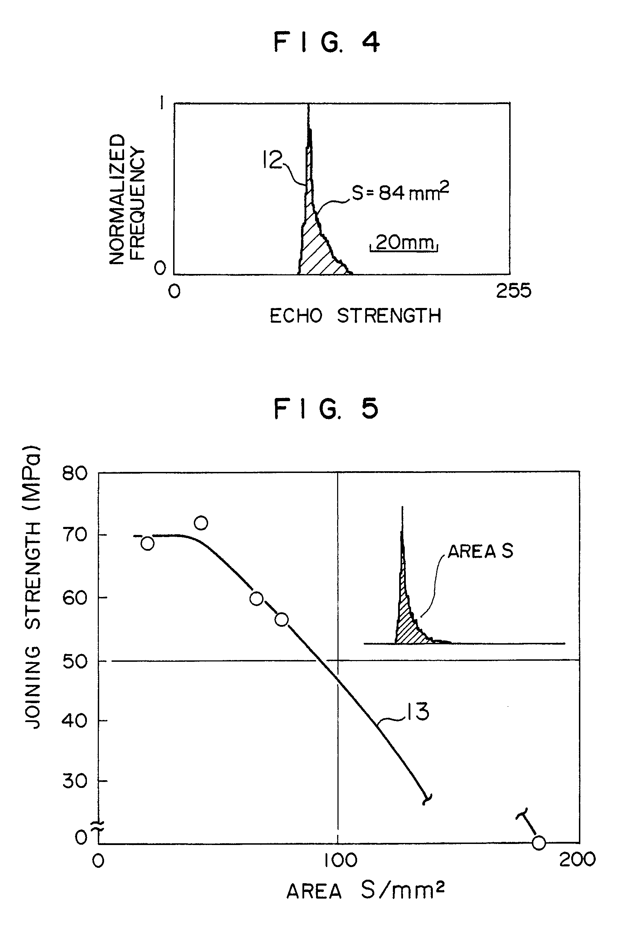

With reference to the figures from Fig. 4 on, another embodiment of this invention will be described.

Fig. 4 is an example of ultrasonic flaw detection of the diffusion bonding interface between zirconia and an aluminum alloy by the pulse reflection method using a focusing probe. In Fig. 4, the echo strength from the completely separated zone shows a value close to that from the completely joined zone. Therefore, the echo occurs only near the echo strength of 12, and the frequency is 0 at echo strength other than 12. The axis of abscissa represents the echo strength and the axis ordinate represents the normalized frequency, that is, the occurrence frequency of the echo normalized in relation to the maximum frequency. In Fig. 4, the numeral 12 indicates a normalized frequency distribution showing the relation between the echo strength and the normalized frequency, and S indicates the area of the hatched zone. If there is a defect in the joined portion, the echo of various levels of strength occurs, so that the width of the normalized echo frequency widens and the area S increases.

The table given below shows an example of the result obtained by experiment to find the relation between the joining strength and the area S. Obviously, there is correlation between the joining strength and the area S.

6

| S/mm² | Joining strength / MPa |
|-------|-------------------------|
| 185 | 0 |
| 84 | 38 |
| 76 | 55 |
| 42 | 71 |
| 20 | 69 |

Fig. 5 shows a calibration curve 13 of the area S vs. The joining strength derived from the result mentioned above.

To estimate the joining strength, a joined portion is inspected for defects by an ultrasonic inspection method, a normalized echo frequency distribution diagram is drawn, according to which diagram, the area S is obtained. Then, by using the calibration curve 13 of Fig. 5, a joining strength corresponding to the value of the area S is obtained as an estimated value.

In this embodiment, the area S of the normalized echo frequency distribution was used as an index for estimating the joining strength. By adopting as the index the maximum value of an echo frequency distribution not normalized, the joining strength can be likewise estimated.

Those embodiments, however, cannot be applied to cases other than an application in which the same combination of materials is used.

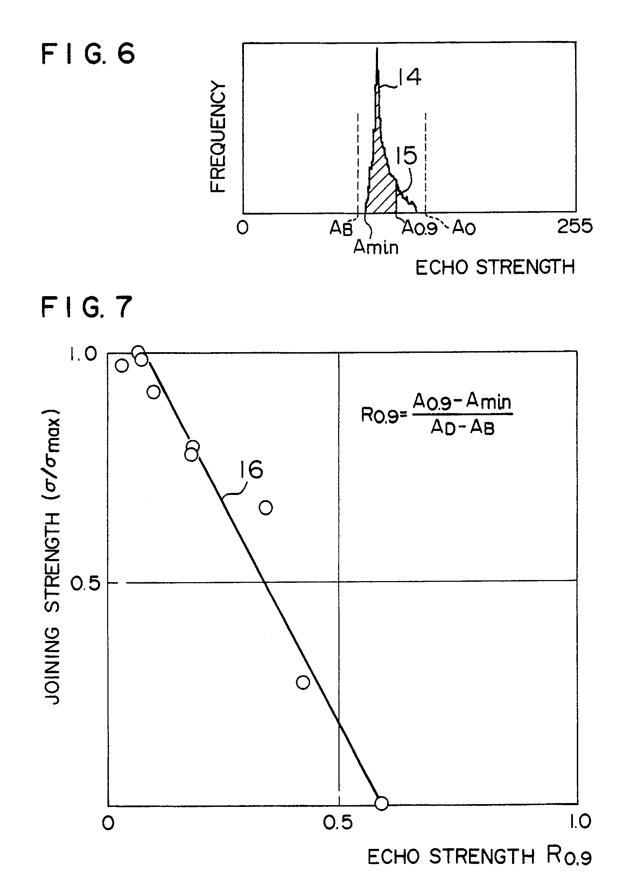

So, with reference to Fig. 6, description will now be made of an embodiment which can be applied to cases where a different combination of materials is used.

Fig. 6 is a characteristic diagram showing an example of the result of ultrasonic flaw detection of the diffusion bonding interface between ceramics and a metal by the pulse reflection method using a focusing probe. The axis of abscissa represents the echo strength and the axis of ordinate represents the frequency of occurrence of echo strength data. In Fig. 6, the numeral 14 indicates the echo frequency distribution showing the relation between the echo strength and the frequency of the echo data, the numeral 15 indicates a border line parallel with the axis of ordinate when the area of the hatched region occupies 90% of the area of the region surrounded by the echo frequency distribution curve and the axis of abscissa, and $A_{0.9}$ indicates the echo strength of the ultrasonic waves at the location of the border line 15. The $A_{min}$ indicates the echo strength of the ultrasonic waves at the point where the echo frequency distribution curve 14 contacts the axis of abscissa. When the interface is joined completely, the echo strength is lowest. When the interface is separated completely, on the other hand, the echo strength is highest. The echo strength in those cases is at constant values, which are determined by the physical properties of the material joined, the surface condition, etc. In Fig. 6, the echo strength obtained from the completely joined portion is denoted by $A_B$, and the echo strength obtained from the completely separated portion is denoted by $A_D$.

In order to produce a calibration curve for estimation of joining strength, joined bodies exhibiting various levels of joining strength are made, and $A_{0.9}$ and $A_{min}$, shown in Fig. 6, are obtained. $A_B$ is obtained by performing ultrasonic flaw detection on a joined body not containing any defect and exhibiting the highest joining strength. The echo strength A is obtained by a joined body with a joining strength of 0. For the joined body of the joining strength of 0, the material before being joined may be used. By using $A_{0.9}$, $A_{min}$, $A_B$, and $A_D$, $R_{0.9}$ is calculated by the equation (1).

$$R_{0.9} = (A_{0.9} - A_{min}) / (A_D - A_B) \qquad (1)$$

Destructive test is conducted on those joined bodies, and a value $\sigma/\sigma_{max}$ is obtained by normalizing the joining strength $\sigma$ in relation to the highest joining strength $\sigma_{max}$ obtained from a joined body containing no defect. Fig. 7 is the calibration curve 16 which is obtained by plotting in a smooth curve the relation between $R_{0.9}$ obtained from joined bodies having various levels of joining strength and normalized joining strength $\sigma/\sigma_{max}$.

Therefore, if $A_{min}$ and $R_{0.9}$ are obtained by performing ultrasonic flaw detection on a joined body, the joining strength of which is unknown, the $\sigma/\sigma_{max}$ can be found from the calibration curve. When $A_B$ and $A_D$ are unknown, they should preferably be obtained by ultrasonic flaw detection, but may be obtained theoretically be calculation.

In the calibration curve 16, changes in the echo of ultrasonic waves due to difference in the materials to be joined together are corrected by a ratio between $A_D - A_B$ and $A_{0.9} - \sigma_{max}$. Therefore, if the calibration curve 16 can be plotted for a specific material, this calibration curve can be applied with no change to other materials.

In this embodiment, the border line 15 was marked at the location where the hatched region is 90% of the area surrounded by the echo frequency distribution curve 14 and the axis of abscissa. However, the border line 15 need not be located at the position of 90%, but may be at the position of 80%, etc. However, it is desirable to adopt the position of 100%, namely, the point where the curve 14 is in contact with the exis of abscissa. This is because errors will be great depending on the form of the curve 14.

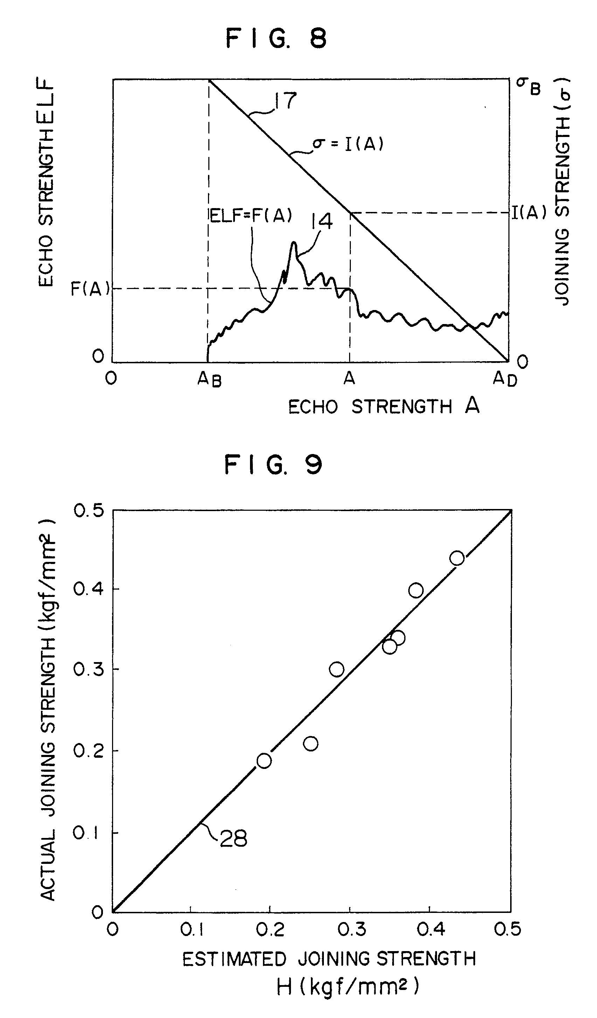

Another embodiment which can be applied to a different combination of materials will be described with reference to Fig. 8. Fig. 8 shows an example of the result of ultrasonic flaw detection at the diffusion bonding interface between ceramics and a metal. In Fig. 8, the numeral 14 indicates an echo frequency distribution showing the relation between the echo strength A and the frequency ELF. The ELF is a function of A, and the function is expressed as ELF = F(A). The numeral 17 indicates a linear function of A where the strength $\sigma_B$ is given by the echo strength $A_B$ obtained from a completely joined portion and the strength 0 is given by the echo strength $A_D$ obtained from the completely separated portion, and the linear function is expressed by $\sigma = I(A)$. For example, if the echo strength is A, the corresponding echo frequency is F(A). If the total of the echo frequency is denoted by $F_\tau$, the rate of the joined portion whose echo strength is A to the total is $F(A)/F_\tau$. On the other hand, the joining strength corresponding to the echo strength A is I(A). From this, it follows that the portion whose joining strength is I(A) exists at the rate of $F(A)/F_\tau$, and its contribution to the total joining strength is $I(A) \times F(A)/F_\tau$. Therefore, an estimate H of the joining area is calculated by the following equation.

$$H = \int_{A_B}^{A_D} I(A) \cdot F(A)\, dA / F_\tau$$

$$= \int_{A_B}^{A_D} I(A) \cdot F(A)\, dA / \int_{D_B}^{A_D} F(A)\, dA \qquad \ldots (2)$$

Fig. 9 is an example of comparison between the joining strength of zirconia and steel estimated by Fig. 8 and the equation (2) and the actual joining strength obtained by shearing test. The numeral 28 indicates a straight line of a case where the estimated joining strength coincides with the actual joining strength. The difference of the estimated joining strength from the actual joining strength shown in Fig. 9, namely, the estimated error is about 0.03 kgf/cm$^2$ at the largest. Thus, the joining strength can be estimated with fairly high accuracy.

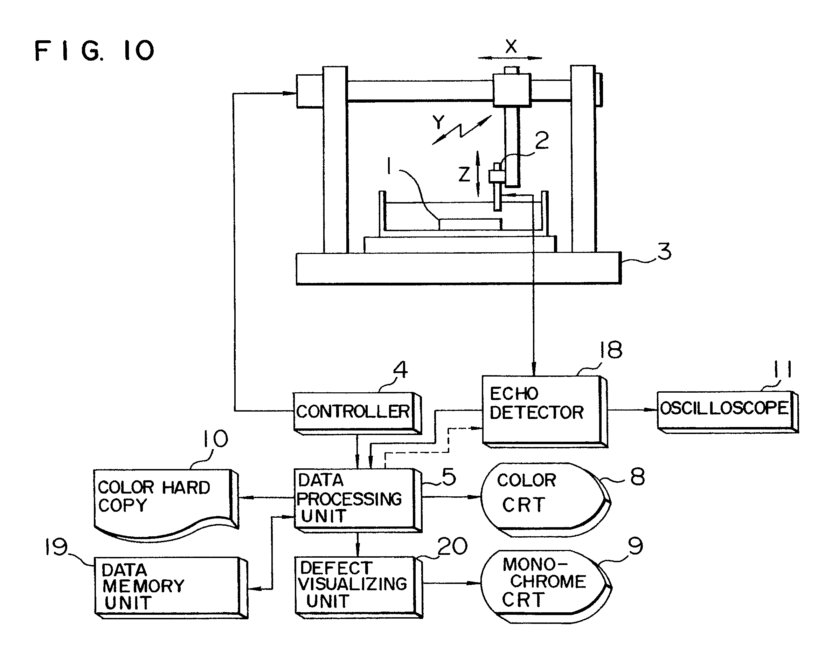

Fig. 10 is a block diagram showing a composition of another embodiment of the nondestructive inspection apparatus for estimating the joining strength nondestructively. In Fig. 10, the numeral 13 indicates a scanner for making a probe 2 scan an object examined 1 in the X, Y, and Z directions. The numeral 4 indicates a controller for the scanner 3, and 18 indicates an echo detector comprising a transmitter circuit for sending pulse signals to the probe 2, an amplifier circuit for amplifying signals from the probe 2, and a detector circuit for detecting defect-caused signals from the output signals from the amplifier circuit. An oscilloscope 11 shows the waveform of signals from the echo detector 18. A data processing unit 5 calculates two-dimensional distribution data on the echo strength and estimated strength values of joined portions according to output signals from the echo detector 18, positional information from the controller 4, and data stored in a data memory unit 19. A color CRT 8 shows a two-dimensional distribution of the echo strength and estimated joining strength, output from the data processing unit 5. A color hard copy unit 10 prints out the two-dimensional distribution of the echo strength and estimated joining strength, supplied from the data processing unit 5. A defect visualizing unit 20 produces a two-dimensional distribution diagram of defects according to two-dimensional distribution information on the defects output from the data processing unit 12. A monochrome CRT 9 shows two-dimensional distribution information on the defects from the defect visualizing unit 20.

The estimation procedure of the strength of a joined portion by the apparatus of Fig. 10 progresses as follows:

(1) Before being joined, the surfaces of an object under test are inspected for flaws from the side not subject to joining.

(2) The data processing unit 5 judges whether or not the signal strength output from the echo detector 18 coincides with the upper limit value $A_D$ of the dynamic range of the data processing unit 5. If they are not coincident, the data processing unit 5 feeds a signal back to the echo detector 18 as indicated by the broken line to automatically adjust the signal amplification factor of the echo detector.

(3) A soundly-joined body of the same material and shape as the object under test is inspected for flaws, and the echo strength obtained from the joined body is stored as $A_B$ in the data memory unit 19.

(4) The data processing unit 5 reads the joining strength of the soundly-joined portion stored in the data memory unit, and sets a linear function I(A) of the echo strength A where $\sigma_B$ is given at the echo strength $A_B$ and 0 is given at the echo strength $A_D$, and the result is stored in the data memory unit 19.

(5) The joined object under test is inspected for flaws, and the relation between the echo strength A obtained from the joined portion and its frequency of occurrence F(A) is obtained by the data processing unit 5.

(6) The data processing unit 5 obtained the estimated value H of the joining strength of the object under test by using the following equation:

$$H = \int_{A_B}^{A_D} I(A) \cdot F(A)\, dA \Big/ \int_{A_B}^{A_D} F(A)\, dA$$

(7) The value of H is shown on the color CRT 8.

By the operation of the various competent units of the apparatus, the estimated strength value of the joined portion can be obtained automatically according to the result of ultrasonic flaw detection of the object under test.

Though no mention was made in the description of the above embodiment, it is possible to prepare in advance a calibration curve showing the relation between said various levels of joining strength and at least one variable among the maximum frequency of the data frequency distribution, the area of the data frequency distribution diagram normalized in relation to the maximum frequency, the difference between the maximum and minimum values of signal strength that have occurred, the ratio between the maximum and minimum values of signal strength that have occurred, and the signal strength at the maximum frequency, store the calibration curve in the data memory unit 19, estimate the joining strength of the joined portion of said object under test from the signal strength obtained from the joined portion of the actual object under test and said calibration curve by using the data processing unit 5, and display the result.

In the foregoing description of the embodiments, only the cases where this invention is applied to ultrasonic flaw detection by the pulse reflection method using a focusing probe, but this invention can be applied to all flaw detection methods by which the relation between the strength of data and its frequency of occurrence can be obtained, such as other types of ultrasonic flaw detection and the radiographic methods.

The cases where the object inspected is immersed in water have been mentioned in the description of the embodiments, but this invention is not limited to ultrasonic flaw detection of an object in water but can be applied in other fluids as the propagating medium of the ultrasonic waves.

According to this invention, it is possible to quantitatively evaluate the formed condition of defects in the joined portion in nondestructive manner, so that the joining strength can be estimated quantitatively without destroying the object.

In addition, according to this invention, the formed condition of defects in the joined portion can be evaluated quantitatively, automatically and nondestructively, and therefore, it is possible to estimate the joining strength without the estimation being affected by the personal difference of the operator in flaw detection.

## Claims

1. A nondestructive inspection method comprising the steps of:
obtaining data on the signal strength In and the occurrence frequency Fn of the recorded signal strength according to a data frequency distribution showing the relation between "n" levels of the signal strength and the occurrence frequency of the recorded various levels of signal strength of the ultrasonic waves or radiant rays, said data being gathered from a joined portion having a certain characteristic value V;
obtaining an estimated value H of the sum of all products of said "n" levels of signal strength and the occurrence frequency of the recorded signal strength data by using the following equation:

$$H = \sum_{n=0}^{n} In \cdot Fn$$

preparing in advance an analytical curve showing the relation between the characteristic value V and the H of joined portions formed in various joined conditions; and

quantitatively estimating a characteristic value of said joined portion from the estimated value H calculated by the above-mentioned equation according to the recorded signal strength and the frequency of occurrence of the signal strength data of the actual joined portion under test, and also from said analytical curve prepared in advance.

2. A nondestructive inspection method comprising the steps of:

obtaining a data frequency distribution showing the relation between the recorded signal strength of the ultrasonic waves or radiant rays and its occurrence freqeuncy, obtained from joined portions by irradiating the ultrasonic waves or radiant rays to the joined portions formed in various joined conditions;

preparing in advance a calibration curve showing the relation between said various levels of joining strength and at least one variable among the maximum frequency of said data frequency distribution, the area of a data frequency distribution diagram normalized in relation to said maximum frequency, the difference between the maximum and minimum values of signal strength that have occurred, the ratio of the maximum value to minimum value of signal strength that have occurred, and the signal strength at the maximum frequency; and

quantitatively estimating the joining strength of said joined portion from the signal strength obtained from the actual joined portion under test, and also from said calibration curve prepared in advance.

3. A nondestructive inspection method comprising the steps of:

obtaining a function I(A) of signal strength A, the value of which function changes linearly and continuously from $\sigma_B$ to 0 in the range of signal strength $A_B$ to $A_D$, according to a data frequency distribution showing the relation between the recorded signal strength of the ultrasonic waves or radiant rays and its frequency of occurrence, obtained from joined portions by irradiating the ultrasonic waves or radiant rays to the joined portions formed in various joined conditions, where the joining strength $\sigma_B$ is given at the signal strength $A_B$ obtained from a completely joined portion of the object under test and the joining strength 0 is given at the signal strength $A_D$ which is recorded when a complete separation occurs in the joined portion; and

taking as an estimate of the joining strength the value H calculated by the following equation in which F(A) is a function which gives a frequency of occurrence of the signal at the signal strength A:

$$H = \int_{A_B}^{A_D} I(A) \cdot F(A) \, dA \Big/ \int_{A_B}^{A_D} F(A) \, dA$$

4. A nondestructive inspection apparatus comprising:

a memory unit (19) for storing a calibration curve showing the relation between said various levels of joining strength and at least one variable among the maximum frequency in a data frequency distribution showing the relation between the recorded signal strength of the ultrasonic waves or radiant rays and its frequency of occurrence, obtained from joined portions by irradiating the ultrasonic waves or radiant rays to said joined portions formed in various joined conditions, the area of the data frequency distribution diagram normalized in relation to said maximum frequency, the difference between the maximum and minimum values of signal strength that have occurred, the ratio between the maximum and minimum values of signal strength that have occurred, and the signal strength at the maximum frequency, at least one of the various levels of joining strength of a completely joined body and the physical property value of the material constituting the joined portion;

a source (2) of ultrasonic waves or X-rays;

a scanning device (3) for making said source (2) of the ultrasonic waves of X-rays perform scanning an object (1);

a sensor (2) for ultrasonic waves or X-rays;

a receiving circuit (18) for accepting output signals from said sensor (2);

a data processing unit (5) for obtaining the function F(A) to show the occurrence frequency at a signal strength A derived from output signals from said receiving circuit (18), and calculating the joining strength of an actual joined portion under test according to the function F(A); and

a display unit (8, 9) for showing the result obtained.

5. A nondestructive inspection method comprising the steps of:

preparing in advance a calibration curve showing the relation between the area of the data frequency distribution diagram normalized in relation to the maximum frequency in a data frequency distribution obtained by inspecting a joined portion for flaws, and the strength of the joined portion; and

estimating the joining strength from the area of said data frequency distribution diagram obtained by inspecting the actual object under test for flaws, and also from said calibration curve prepared in advance.

6. A nondestructive inspection method comprising the steps of:

obtaining the signal strength $A_B$ from complete joining, the signal strength $A_D$ from complete separation, the signal strength $A\alpha$ which occupies a predetermined rate $\alpha$ to the area of said data frequency distribution diagram, and the minimum value $A_{min}$ of signal strength obtained from the joined portion;

calculating the following equation:

$$R\alpha = (A\alpha - A_{min})/(A_D - A_B)$$

preparing in advance a calibration curve showing the relation between $R\alpha$ obtained as a result; and

estimating the joining strength from the signal strength obtained from flaw detection of the actual object under test and also from the calibration curve prepared in advance.

# F I G. 1

EP 0 407 930 A1

# F I G. 2

# F I G. 3

# F I G. 4

# F I G. 5

14

F I G. 6

F I G. 7

$$R_{0.9} = \frac{A_{0.9} - A_{min}}{A_D - A_B}$$

# FIG. 8

# FIG. 9

# FIG. 10

EP 0 407 930 A1

# DOCUMENTS CONSIDERED TO BE RELEVANT

EP 90113055.9

| Category | Citation of document with indication, where appropriate, of relevant passages | Relevant to claim | CLASSIFICATION OF THE APPLICATION (Int. Cl.5) |
|---|---|---|---|
| | PATENT ABSTRACTS OF JAPAN, unexamined applications, P field, vol. 5, no. 134, August 26, 1981 THE PATENT OFFICE JAPANESE GOVERNMENT page 137 P 77 | 1-6 | G 01 N 29/00 |
| D,A | * Kokai-no. 56-72 341 (MITSUBISHI JUKOGYO) * & JP-A-56-72 341 (MITSUBISHI) -- | | |
| | PATENT ABSTRACTS OF JAPAN, unexamined applications, P field, vol. 6, no. 51, April 6, 1982 THE PATENT OFFICE JAPANESE GOVERNMENT page 89 P 108 | 1-6 | |
| D,A | * Kokai-no. 56-164 953 (TOYODA CHUO KENKYUSHO) * & JP-A-56-164 953 (TOYODA) -- | | TECHNICAL FIELDS SEARCHED (Int. Cl.5) |
| | PATENT ABSTRACTS OF JAPAN, unexamined applications, P field, vol. 6, no. 141, July 30, 1982 THE PATENT OFFICE JAPANESE GOVERNMENT page 137 P 131 | 1-6 | G 01 N |
| D,A | * Kokai-no. 57-64 161 (TOKYO SHIBAURA DENKI) * & JP-A-57-64 161 (TOKYO SHI-BAURA) -- | | |
| D,A | <u>US - A - 4 428 235</u> (SUGIYAMA) * Abstract; fig. 3 * & JP-A-57-8 445 (HITACHI) -- | 1-6 | |
| A | SOVIET INVENTIONS ILLUSTRA- | 1-6 | |

The present search report has been drawn up for all claims

| Place of search | Date of completion of the search | Examiner |
|---|---|---|
| VIENNA | 23-10-1990 | NARDAI |

EPO FORM 1503 03.82 (P0401)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| | ted, section EL, week 8823, July 20, 1988 DERWENT PUBLICATIONS LTD., London, S 03 * SU-1352 348 (KEMER UNIV) * -- | | |
| A | SOVIET INVENTIONS ILLUSTRATED, section EL, week 83/27, August 17, 1983 DERWENT PUBLICATIONS LTD., London, S 02 S 03 * SU-954 820 (SOKHABEEV V M) * ---- | 1-6 | |

TECHNICAL FIELDS
SEARCHED (Int. Cl.5)

The present search report has been drawn up for all claims

| Place of search | Date of completion of the search | Examiner |
|---|---|---|
| VIENNA | 23-10-1990 | NARDAI |

EPO FORM 1503 03.82 (P0401)